# EUROPEAN PATENT APPLICATION

(11) **EP 3 667 630 A1**
(43) Date of publication of application: **17.06.2020**
(21) Application number: 18212527.8
(22) Date of filing: 14.12.2018
(51) Int. Cl.: G08B 13/196

(54) **VIDEO MONITORING SYSTEM**

(71) Applicant: Carrier Corporation, Palm Beach Gardens, FL 33418 (US)
(72) Inventor: Dobrowolski, Jaroslaw, Palm Beach Gardens, FL 33418 (US)
(74) Representative: Schmitt-Nilson Schraud Waibel Wohlfrom Patentanwälte Partnerschaft mbB

(57) **Abstract**

A method for customizing a user interface to a video monitoring system having a camera includes defining in the user interface a grid of rows and columns, the grid including a plurality of cells; and assigning a component of the user interface to a cell or a group of cells; wherein the component includes a camera component; wherein the camera component displays video from the camera.

## Description

### BACKGROUND

The subject matter disclosed herein generally relates to video monitoring systems and, more particularly, to a customizable user interface for a video monitoring system.

Video monitoring systems (also referred to as surveillance systems) include one or more cameras and a display that allows a user to view video (live or recorded) from the one or more cameras. Existing user interfaces for video monitoring applications have little or no customizability. The user interfaces are limited and based on pre-defined layout templates. As a result, existing user interfaces may not fulfill user needs in terms of personalization. This has a direct impact on user experience and productivity.

### SUMMARY

According to an embodiment, a method for customizing a user interface to a video monitoring system having a camera includes defining in the user interface a grid of rows and columns, the grid including a plurality of cells; and assigning a component of the user interface to a cell or a group of cells; wherein the component includes a camera component; wherein the camera component displays video from the camera.

In addition to one or more of the features described herein, or as an alternative, further embodiments of the method may include assigning a second component of the user interface to a second cell or a second group of cells.

In addition to one or more of the features described herein, or as an alternative, further embodiments of the method may include wherein the second component comprises a camera control component configured to control at least one parameter of the camera.

In addition to one or more of the features described herein, or as an alternative, further embodiments of the method may include wherein the second component comprises a device listing component identifying devices in the video system.

In addition to one or more of the features described herein, or as an alternative, further embodiments of the method may include wherein the second component comprises a settings component presenting settings configurable in the video system.

According to another embodiment, a video monitoring system includes a camera; a controller in communication with the camera, the controller configured to provide a user interface to a remote system; the user interface including a grid of rows and columns, the grid including a plurality of cells; and a component of the user interface assigned to a cell or a group of cells; wherein the component includes a camera component; wherein the camera component displays video from the camera.

In addition to one or more of the features described herein, or as an alternative, further embodiments of the system may include wherein the user interface includes a second component of the user interface assigned to a second cell or a second group of cells.

In addition to one or more of the features described herein, or as an alternative, further embodiments of the system may include wherein the second component comprises a camera control component configured to control at least one parameter of the camera.

In addition to one or more of the features described herein, or as an alternative, further embodiments of the system may include wherein the second component comprises a device listing component identifying devices in the video system.

In addition to one or more of the features described herein, or as an alternative, further embodiments of the system may include wherein the second component comprises a settings component presenting settings configurable in the video system.

According to another embodiment, a computer program product for customizing a user interface to a video monitoring system having a camera, the computer program product comprising a non-transitory computer readable storage medium having program instructions embodied therewith, the program instructions executable by a processor to cause the processor to implement operations including defining in the user interface a grid of rows and columns, the grid including a plurality of cells; and assigning a component of the user interface to a cell or a group of cells; wherein the component includes a camera component; wherein the camera component displays video from the camera.

Technical effects of embodiments of the present disclosure include the ability for a user to customize a user interface to a video monitoring system by assigning components of the user interface into a grid made up of a plurality of cells.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present disclosure is illustrated by way of example and not limited in the accompanying figures in which like reference numerals indicate similar elements.
FIG. 1 depicts a video monitoring system in an example embodiment;
FIG. 2 depicts a process for configuring a user interface in an example embodiment;
FIG. 3 depicts defining a grid in the user interface in an example embodiment;
FIG. 4 depicts cells of the grid in the user interface in an example embodiment;
FIG. 5 depicts components placed in cells of the grid in the user interface in an example embodiment; and
FIG. 6 depicts example components in the user interface in an example embodiment.

### DETAILED DESCRIPTION

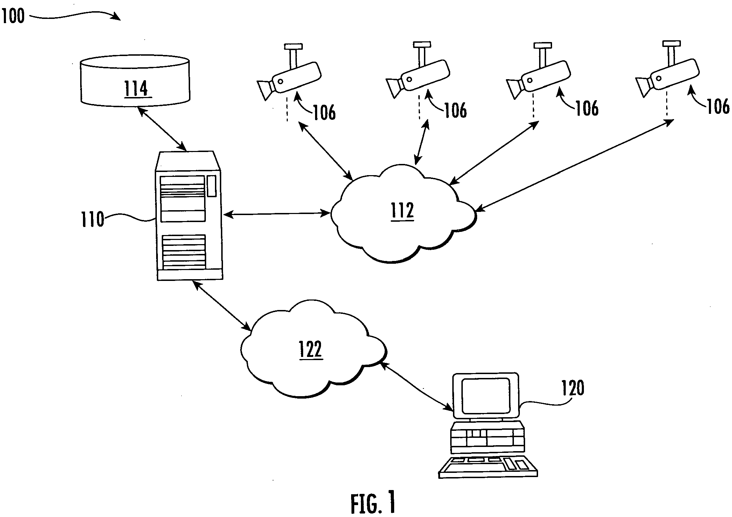

FIG. 1 depicts a video monitoring system 100 in an example embodiment. The video monitoring system 100 includes one or more cameras 106 that acquire video of one or more locations. The video monitoring system 100 may be a surveillance system for security purposes. The cameras 106 communicate with a controller 110 over a network 112. The controller 110 may be implemented using known devices, such as a processor-based device (e.g., server, personal computer, application specific controller, etc.) that executes software to implement the functions described herein. The network 112 may be a wired and/or wireless network, such as a LAN, WAN, WiFi, Zigbee, BLE, etc. The network 112 may be implemented by cabling connecting the cameras 106 to the controller 110. A storage device 114 may be used to store video obtained from the cameras 106. The storage device 114 may be part of the controller 110 or may be a separate component in communication with the controller 110.

The controller 110 is in communication with a remote system 120 over a network 122. The remote system 120 may be implemented using known devices, such as a processor-based device (e.g., personal computer, laptop, tablet, smart phone, etc.) that executes software to implement the functions described herein. The network 112 may be a wired and/or wireless network, such as a LAN, WAN, WiFi, Zigbee, the Internet, etc. The network 122 may be implemented by cabling connecting the remote system 120 to the controller 110. In example embodiments, remote system 120 communicates with the controller 110 over network 112. Although a single remote system 120 is shown, it is understood that multiple remote systems 120 may access the controller 110.

The remote system 120 may execute a software application (e.g., a web browser) to connect with the controller 110. The controller 110 provides a network-based, user interface to the remote system 120. This allows the remote system 120 to access the controller 110 without the need to install any software on the remote system 120. In other embodiments, the remote system 120 is also a host of the user interface (e.g., a web application). The remote system 120 executes a web browser to open the web application and connects to a local host in order to open user interface. This scenario is similar to one when the user would use the controller 110 as a remote system 120, such as, using web browser to connect to its own host in order to receive the user interface. The user interface provides for the presentation of video from a plurality of cameras 106 (live or recorded), control of the cameras 106, and other features as described herein.

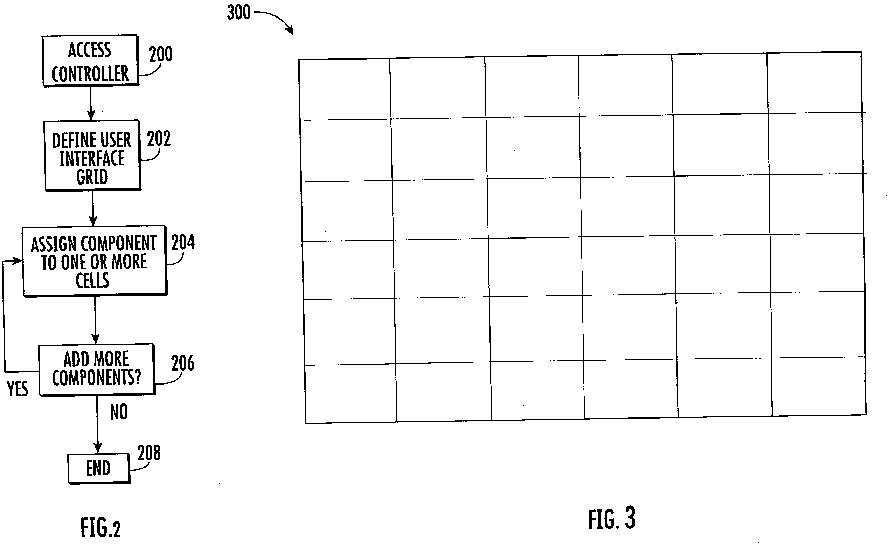

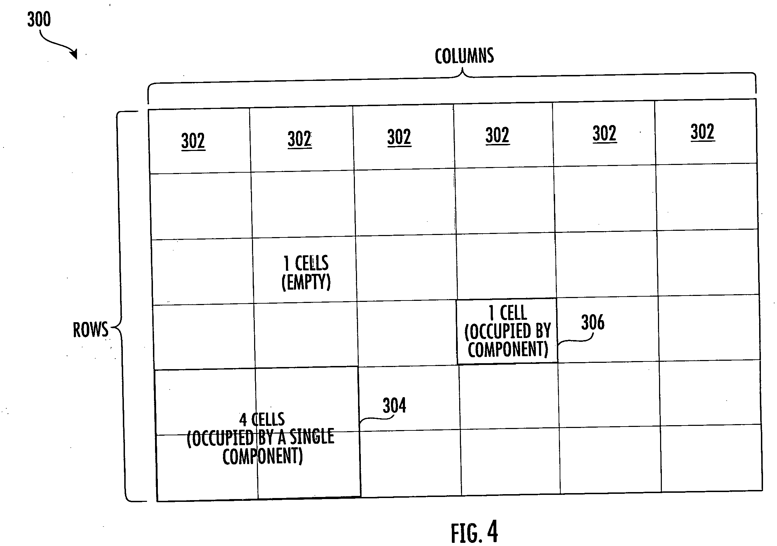

The user interface to the video monitoring system 100 is highly customizable and allows users of the remote system 120 to configure the user interface in a personalized manner. FIG. 2 depicts a process for configuring a user interface in an example embodiment. The process begins at 200 where the remote system 120 accesses controller 110, for example, through a web browser. At 202, the user at the remote system 120 defines a user interface grid by specifying a number of rows and columns. FIG. 3 depicts defining a grid 300 in the user interface in an example embodiment, in which the user has specified 6 rows and 6 columns. FIG. 4 depicts a row of cells 302 of the grid 300 in the user interface, in an example embodiment.

Referring back to FIG. 2, at 204 the user at the remote system 120 assigns a component to a cell or a group of contiguous cells. The user can select a cell or a group of cells and then specify a component to occupy the selected cell or selected group of cells. In other embodiments, the user can select the component first and place it on the grid (e.g., the user can use drag & drop features to place a selected component on the grid or a cell could be automatically assigned by the application). After that, user can make appropriate adjustments such as: resize the component so that it occupies more than one cell or a group of contiguous cells; or move/drag the component so that is occupies different cell or group of contiguous cells. The component is then automatically sized to fit within the selected cell or selected group of cells. This step may be repeated as desired by the user as shown at 206. The user, at any time, may modify the size of the component (e.g., decide how many contiguous cells the component occupies) and a location of the component (e.g., decide which cell or group of cells on the grid the component occupies). When the user is done adding components and the process ends at 208. Prior to exiting, the user at the remote system 120 can save the arrangement of components in the grid 300.

FIG. 4 depicts a first component 304 assigned to 4 cells and a second component 306 assigned to one cell. The components include a camera component, a camera control component, a device listing component and a settings component. When a camera component is assigned to a cell or group of cells, a single camera is identified for that camera component. When a camera component is assigned to cell or group of cells, the controller 110 provides the output of the identified camera 106 to the remote system 120. The video is displayed in the identified cell or group of cells. The video provided to the remote system 120 may be live or recorded, as controlled by the user of the remote system 120 through the camera component.

When a camera control component is assigned to a cell or group of cells, a single camera 106 is identified for that camera control component. The camera control component allows a user at the remote system to control one or more parameters of the identified camera 106. The features may include pan, tilt, zoom, video definition, contrast, white balance, etc.

The device listing component identifies devices in the video system 100. The settings component provides a user at the remote system 120 access to any of the settings of the video system configurable by the controller 110.

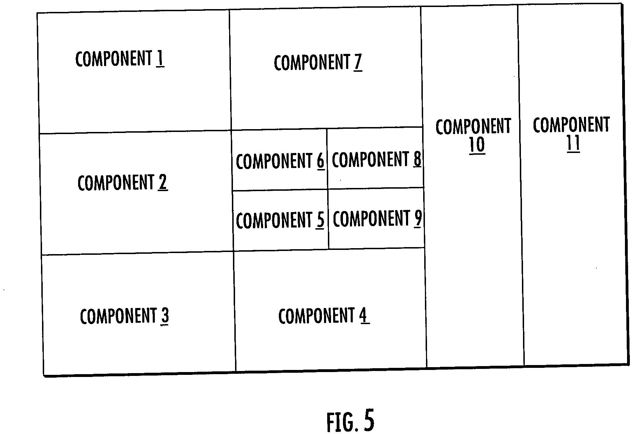

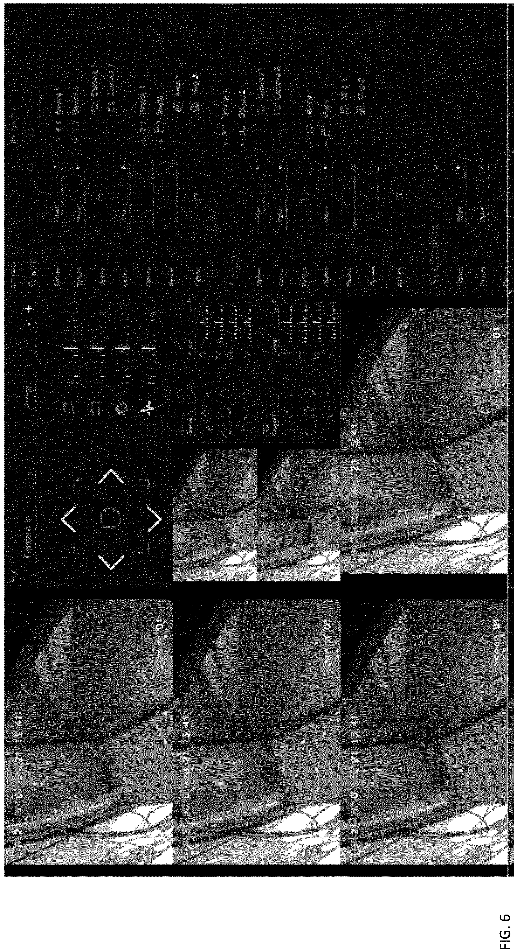

FIG. 5 depicts components placed in cells of the grid in the user interface in an example embodiment. In this example, the user at the remote system 120 has assigned eleven components to the grid 300. FIG. 6 depicts example components in the user interface in an example embodiment. Components 1-6 of FIG. 5 are camera components in FIG. 6. Components 7-9 of FIG. 5 are camera control components in FIG. 6. Component 10 of FIG. 5 is a settings component in FIG. 6. Component 11 of FIG. 5 is a device listing component in FIG. 6. The embodiments in FIG. 5 and FIG. 6 are examples only; it should be understood that many different configurations of the user interface may be created by a user.

Embodiments of the present disclosure provide a user interface to a video monitoring system that is highly customizable to allow a user to create component layouts to fulfill their needs.

As described above, embodiments can be in the form of processor-implemented processes and devices for practicing those processes, such as a processor in controller 110 and remote system 120. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, such as over electrical wiring or cabling, through fiber optics, or via electromagnetic radiation, wherein, when the computer program code is loaded into an executed by a processor, the computer becomes an device for practicing the embodiments. When implemented on a general-purpose microprocessor, the computer program code segments configure the microprocessor to create specific logic circuits.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

As described herein, in some embodiments various functions or acts may take place at a given location and/or in connection with the operation of one or more apparatuses, systems, or devices. For example, in some embodiments, a portion of a given function or act may be performed at a first device or location, and the remainder of the function or act may be performed at one or more additional devices or locations. Further, one of ordinary skill in the art will appreciate that the steps described in conjunction with the illustrative figures may be performed in other than the recited order, and that one or more steps illustrated may be optional.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A method for customizing a user interface to a video monitoring system having a camera, the method comprising:
defining in the user interface a grid of rows and columns, the grid including a plurality of cells; and
assigning a component of the user interface to a cell or a group of cells;
wherein the component includes a camera component;
wherein the camera component displays video from the camera.

2. The method of claim 1 further comprising:
assigning a second component of the user interface to a second cell or a second group of cells.

3. The method of claim 2 wherein the second component comprises a camera control component configured to control at least one parameter of the camera.

4. The method of claim 2 or 3 wherein the second component comprises a device listing component identifying devices in the video system.

5. The method of any of claims 2 to 4 wherein the second component comprises a settings component presenting settings configurable in the video system.

6. A video monitoring system comprising:
a camera;
a controller in communication with the camera, the controller configured to provide a user interface to a remote system;
the user interface including a grid of rows and columns, the grid including a plurality of cells; and
a component of the user interface assigned to a cell or a group of cells;
wherein the component includes a camera component;
wherein the camera component displays video from the camera.

7. The video monitoring system of claim 6 wherein:
the user interface includes a second component of the user interface assigned to a second cell or a second group of cells.

8. The video monitoring system of claim 7 wherein the second component comprises a camera control component configured to control at least one parameter of the camera.

9. The video monitoring system of claim 7 or 8 wherein the second component comprises a device listing component identifying devices in the video system.

10. The video monitoring system of any of claims 7 to 9 wherein the second component comprises a settings component presenting settings configurable in the video system.

11. A computer program product for customizing a user interface to a video monitoring system having a camera, the computer program product comprising a non-transitory computer readable storage medium having program instructions embodied therewith, the program instructions executable by a processor to cause the processor to implement operations comprising:
defining in the user interface a grid of rows and columns, the grid including a plurality of cells; and
assigning a component of the user interface to a cell or a group of cells;
wherein the component includes a camera component;
wherein the camera component displays video from the camera.
